(19) **Europäisches Patentamt**
European Patent Office
Office européen des brevets

(11) **EP 3 841 923 B1**

(12) **EUROPÄISCHE PATENTSCHRIFT**

(45) Veröffentlichungstag und Bekanntmachung des Hinweises auf die Patenterteilung:
**15.11.2023 Patentblatt 2023/46**

(51) Internationale Patentklassifikation (IPC):
*A47F 9/00* (2006.01)   *G01G 19/414* (2006.01)
*G06Q 10/08* (2023.01)   *A47F 9/02* (2006.01)
*A47F 9/04* (2006.01)   *A47F 3/04* (2006.01)

(21) Anmeldenummer: **21157126.0**

(22) Anmeldetag: **27.02.2018**

(52) Gemeinsame Patentklassifikation (CPC):
**A47F 9/00; G01G 19/4144;** A47F 3/0413;
A47F 9/02; A47F 9/046; G06Q 10/087

(54) **VERKAUFSEINRICHTUNG**

SALES DEVICE

COMPTOIR DE VENTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2017   DE 102017001832**

(43) Veröffentlichungstag der Anmeldung:
**30.06.2021   Patentblatt 2021/26**

(62) Dokumentnummer(n) der früheren Anmeldung(en) nach Art. 76 EPÜ:
**18709500.5 / 3 589 170**

(73) Patentinhaber: **Bizerba SE & Co. KG**
**72336 Balingen (DE)**

(72) Erfinder:
• **KRÜGER, Antonio**
**66125 Saarbrücken (DE)**

• **RABER, Frederic**
**66583 Spiesen-Elversberg (DE)**
• **DRISSNER, Jörg**
**72336 Balingen (DE)**
• **SCHICK, Frank**
**72461 Albstadt (DE)**
• **GRÖBER, Roland**
**72406 Bisingen (DE)**

(74) Vertreter: **Huber, Meik**
**Bizerba SE & Co. KG**
**PF 18/1**
**Wilhelm-Kraut-Straße 65**
**72336 Balingen (DE)**

(56) Entgegenhaltungen:
DE-A1- 10 045 516    DE-A1-102011 014 839
US-A1- 2014 278 204

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Verkaufseinrichtung zum Bedienverkauf. Mit der Verkaufseinrichtung werden zum Beispiel in Supermärkten oder in Fachgeschäften Fleisch, Wurst und Käse verkauft. Die Erfindung betrifft ferner ein Verfahren zum Betrieb einer Verkaufseinrichtung.

Die DE 10 2011 014 839 A1 zeigt eine Verkaufstheke mit einem Wägesystem, das eine Positionserkennungseinrichtung umfasst, die mittels Lichtgitter die Position eines zu entnehmenden Lebensmittels erkennt und daraus auf das Lebensmittel rückschließt.

Die DE 100 45 516 A1 zeigt eine Verkaufstheke für Eis, wobei der Zugriff in einen bestimmten Eisbehälter mittels Lichtschranken ermittelt wird und daraus wird auf die Anzahl verkaufter Eiskugeln pro Sorte zurückgeschlossen. Ebenfalls sind für jeden Eisbehälter Gewichtssensoren vorgesehen, die die Gesamtmasse des Eisbehälters bestimmen.

Aufgabe der Erfindung ist es eine Verkaufseinrichtung zu schaffen, die den Verkaufsvorgang in einem Ladengeschäft effizienter gestaltet, für den Bediener vereinfacht und dem Kunden auf seinen Einkauf zugeschnittene Zusatzinformationen zur Verfügung stellt.

Diese Aufgabe wird durch eine Verkaufseinrichtung nach Anspruch 1 und ein Verfahren zum Betrieb einer Verkaufseinrichtung nach Anspruch 15 gelöst.

Erfindungsgemäß wird eine Verkaufseinrichtung zum Bedienverkauf vorgeschlagen. An einer Verkaufstheke werden in einem Supermarkt oder Fachgeschäft insbesondere Fleisch, Wurst oder Käse im Frischeverkauf verkauft. Das heißt, die Produkte werden anhand des Kundenwunsches verwogen und abgepackt. Dabei werden auch Produkte nach Stückpreis, zum Beispiel Dosen oder nach Festgewicht ausgezeichnete Lebensmittel verkauft. Die Verkaufseinrichtung besteht aus mindestens einer Ladenwaage und einer Theke. Die Theke umfasst einen Auslagebereich, ein Thekenbrett und eine Abdeckung. Die Abdeckung der Theke ist in einer Ausführungsform transparent und besteht aus einem vorderen Teil, einem oberen Teil und seitlichen Teilen. Drucksensoren sind im Auslagebereich der Verkaufseinrichtung angebracht, die lokal eine jeweilige Gewichtskraft erfassen. Die Verkaufseinrichtung umfasst eine Auswerteeinheit. In einer Ausführungsform ist die Auswerteeinheit in mindestens einer der Ladenwaagen angebracht. Die Auswerteeinheit ermittelt bei einer Veränderung eines Signals mindestens eines Drucksensors den Ort, der dem Signal entspricht. So kann ein Ort innerhalb des Auslagebereichs ermittelt werden, an dem sich die Gewichtskraft auf die Drucksensoren ändert. Anhand dieser Position ist ermittelbar, um welches Produkt es sich handelt. In einer Ausführungsform ermittelt ein Drucksensor permanent oder periodisch den Druck, das heißt einen Gewichtswert oder einen Wert proportional zum Gewichtswert, der auf dem Drucksensor lastet. Eine Veränderung des vom Drucksensor festgestellten Gewichts, das zu einer Veränderung des Signals eines Drucksensors führt, wird ausgelöst durch das Entnehmen von Produkten, zum Beispiel im Falle von geschnittener und aufgestapelter Wurst durch das Entnehmen eines Teil des Stapels. Eine Veränderung des vom Drucksensor festgestellten Gewichts, das zu einer Veränderung des Signals eines Drucksensors führt, wird auch ausgelöst durch das Drücken auf das Produkt zum Beispiel mit einer Gabel. Eine Bedienperson kann auf das Produkt drücken, um das Signal auszulösen und so das Produkt durch die Verkaufseinrichtung identifizieren zu lassen. Die erfindungsgemäße Verkaufseinrichtung erleichtert die Bedienung und die Auswahl von Produkten. Anstatt wie im Stand der Technik eine Produkterkennungsnummer (PLU Nummer) in einem Bedienfeld einer Ladenwaage einzugeben, um ein Produkt zu identifizieren, ist es mit der erfindungsgemäßen Verkaufseinrichtung ausreichend, wenn ein Bediener auf das Produkt drückt oder das Produkt entnimmt. Mit diesem Vorgang wird das Produkt automatisch ausgewählt.

Erfindungsgemäß umfasst die Ladenwaage eine Wägeeinheit, die eine Gewichtsinformation generiert. Die Verkaufseinrichtung, insbesondere die Ladenwaage umfasst eine Informationseinheit, die entsprechende Zusatzinformationen zu einem Produkt generiert. Ein dem Kunden zugewandtes Display der Verkaufseinrichtung und/oder der Ladenwaage zeigt diese Zusatzinformationen und/oder Gewichtsinformation an.

In einer Ausführungsform sind die Drucksensoren mindestens drei Wägezellen, vorzugsweise vier Wägezellen. Bei vier Wägezellen sind die Wägezellen mit ihren Krafteinleitungsseiten an den vier Ecken einer Produktpräsentationsplatte befestigt. Die Produktpräsentationsplatte bildet den Boden des Auslagebereichs. Auf ihr liegen die zu verkaufenden Produkte. Bei drei Wägezellen befinden sich die Wägezellen in drei Ecken der Produktpräsentationsplatte und die vierte Ecke ist an einem Fixpunkt gelagert. Die Auswerteeinheit erhält die Wägedaten aus den Wägezellen und ermittelt daraus die Schwerpunktkoordinaten der Produktpräsentationsplatte. Die Produktpräsentationsplatte hat ein Eigengewicht sowie das Gewicht der Produkte, die auf ihr gelagert sind. Die komplette Produktpräsentationsplatte hat einen Schwerpunkt, der von beiden Gewichtsanteilen abhängt.

In einer Ausführungsform ermittelt die Auswerteeinheit in periodischen Abständen oder bei einer Änderung des Gesamtgewichts der Produktpräsentationsplatte aus den Wägedaten der Wägezellen neue Schwerpunktdaten. Um eine Änderung des Gesamtgewichts der Produktpräsentationsplatte festzustellen, ist es ausreichend, wenn eine Änderung der auf eine Wägezelle einwirkenden Gewichtskraft detektiert wird.

In einer Ausführungsform werden alle Wägezellen periodisch tariert, das heißt periodisch auf Null gesetzt. Periodisch in diesem Zusammenhang meint regelmäßig mit kurzen Zeitabständen. Wenn sich jedoch die Gewichtskraft auf einer Wägezelle gerade ändert, dann darf kein Tarierungsvorgang stattfinden. Insofern meint periodisch nicht, nach einem starren Zeitschema, das nicht unterbrochen werden kann. Vielmehr ist damit gemeint, regelmäßig wenn die Wägezellen gerade keine Veränderung des Gesamtgewichts auf der Produktpräsentationsplatte detektieren. Durch das Tarieren der Wägezellen sind die von den Wägezellen an die Auswerteeinheit übermittelten Gewichtsdaten bei allen Wägezellen Null, solange kein Produkt auf die Produktpräsentationsplatte gelegt wird oder von ihr entfernt wird. Bei einer Änderung des Gesamtgewichts der Produktpräsentationsplatte, das heißt wenn ein Produkt auf die Produktpräsentationsplatte gelegt wird oder von ihr entnommen wird, werden die Wägedaten mindestens einer Wägezelle ungleich Null sein. In diesem Fall ermittelt die Auswerteeinheit aus den neuen Wägedaten der Wägezellen neue Schwerpunktkoordinaten. Diese neuen Schwerpunktkoordinaten entsprechen dem Ort auf der Produktpräsentationsplatte, an dem das Produkt entnommen oder hinzugefügt wurde. Dieser Ort ist der von der Auswerteeinheit zugeordnete Ort innerhalb des Auslagebereichs.

In einer Ausführungsform empfängt die Auswerteeinheit Wägedaten von den Wägezellen, die das jeweils anteilige Gewicht der Produktpräsentationsplatte mit all den darauf liegenden Produkten wiederspiegeln. Bei einer Änderung der Wägedaten oder in periodischen Abständen bildet die Auswerteeinheit einen Vektor, der die Veränderung zwischen den vorhergehenden Schwerpunktkoordinaten und den neuen Schwerpunktkoordinaten wiedergibt. Der von der Auswerteeinheit zugeordnete Ort auf der Produktpräsentationsplatte entspricht dem vorhergehenden Schwerpunkt verschoben entlang des Vektors, wobei die Länge der Verschiebung mit dem Gesamtgewicht der Produktproduktionsplatte skaliert ist.

In einer Ausführungsform sind die Drucksensoren in einer Matte eingearbeitet. Die Matte dient als Boden des Auslagebereichs auf dem die Produkte ausgelegt sind. Die Matte bildet flächig oder in einem regelmäßigem Raster Gewichtswerte.

In einer Ausführungsform ist das Material aus dem die Matte gebildet ist hygienisch und lebensmittelecht. So wird sichergestellt, dass die Matte gut gereinigt werden kann und Lebensmittel direkt und unverpackt auf der Matte abgelegt werden können. Die Matte bildet mittels eines kapazitiven oder resistiven Messverfahrens die Gewichtswerte.

In einer Ausführungsform ist das Raster der Drucksensoren derart ausgestaltet, dass mittels der Kombination der Signale der Drucksensoren die Umrisse der Produkte im Auslagebereich ermittelbar sind. Eine Steuereinheit in der Verkaufseinrichtung, zum Beispiel ein Teil der Auswerteeinheit, verknüpft die Signale der Drucksensoren derart, dass aus der Kombination der einzelnen Signale und der Kenntnis der Lage der einzelnen Sensoren im Auslagebereich die Umrisse der Produkte zumindest approximiert werden können.

In einer Ausführungsform umfasst die Auswerteeinheit eine erste Speichereinheit. Die erste Speichereinheit ordnet entsprechende Produkterkennungsnummern den Orten im Auslagebereich zu. Ist eine Veränderung eines Signals eines oder mehrerer Drucksensoren eingegangen, kann so auf einen Ort im Auslagebereich rückgeschlossen werden, wobei eine Produkterkennungsnummer die zu diesem Ort beziehungsweise zu diesem Drucksensor oder diesen Drucksensoren gehört identifiziert wird. In einer Ausführungsform ist für den Fall, dass die Signale der Drucksensoren nicht eindeutig einer Produkterkennungsnummer zugeordnet werden können, vorgesehen, dass eine geringe Zahl von Produkterkennungsnummern identifiziert werden, die bei einer entsprechenden Änderung des Signals der Drucksensoren in Frage kommen. Diese werden der Bedienperson zur Auswahl angezeigt.

Erfindungsgemäß ist das dem Kunden zugewandte Display der Verkaufseinrichtung in einer vorderen Abdeckung der Theke integriert. Die vordere Abdeckung weist einen transparenten Bereich auf und die Zusatzinformationen werden zumindest teilweise in dem transparenten Bereich der vorderen Abdeckung angezeigt. Ein Kunde, der durch den transparenten Bereich auf den Auslagebereich der Theke schaut, sieht die Produkte im Auslagebereich und dazu in unmittelbarer Nähe in seinem Blickfeld die entsprechenden Zusatzinformationen, Gewichtsinformationen und/oder Preisinformationen, die durch die Verkaufseinrichtung angezeigt werden.

In einer Ausführungsform weist die vordere Abdeckung einen transparenten und einen nicht transparenten Bereich auf. Preisinformation und/oder Gewichtsinformation werden in dem nicht transparenten Bereich der vorderen Abdeckung angezeigt. Zusatzinformationen werden in dem transparenten Bereich der vorderen Abdeckung angezeigt.

In einer Ausführungsform umfasst die Verkaufseinrichtung einen Projektor, der im Bereich einer oberen Abdeckung angebracht ist. Der Projektor projiziert ein Lichtsignal auf die vordere Abdeckung. Die vordere Abdeckung dient als Projektionsfläche für das Lichtsignal. Das Lichtsignal ist auf der Seite der vorderen Abdeckung sichtbar, auf der das Lichtsignal nicht auf die vordere Abdeckung trifft. Mit anderen Worten hat die vordere Abdeckung eine Vorderseite und eine Rückseite. Die Vorderseite ist dem Kunden zugewandt, die Rückseite ist dem Auslagebereich zugewandt. Der Projektor ist derart angeordnet, dass das Lichtsignal auf die Rückseite der vorderen Abdeckung trifft. Das projizierte Lichtsignal ist auf der Vorderseite der vorderen Abdeckung sichtbar, so dass der Kunde die Information des Lichtsignals auf der vorderen Abdeckung sehen kann. Die Preisinformation und/oder Gewichtsinformation werden ebenfalls auf die Rückseite der vorderen Abdeckung projiziert, jedoch in einen Bereich der vorderen Abdeckung der nicht transparent oder semi-transparent ist. Zum Beispiel ist das ein Bereich, der von der Kundenseite aus weiß wirkt. Dennoch ist das Lichtsignal, das auf die Rückseite der vorderen Abdeckung in diesem Bereich trifft, auf der Vorderseite sichtbar. So können Preisinformation und/oder Gewichtsinformation auf einem weißen Untergrund dargestellt werden, so dass sie einfacher zu lesen sind.

In einer Ausführungsform weist die vordere Abdeckung eine holographische Struktur auf. Die holographische Struktur macht Licht, das in einem ersten Winkelbereich auf die vordere Abdeckung trifft, sichtbar. Für Licht, das in einem zweiten Winkelbereich auf die vordere Abdeckung trifft, ist die holographische Struktur transparent.

In einer Ausführungsform ist der Projektor in einem Bereich von Streben untergebracht, die die Begrenzung der Abdeckung bilden. So ist der Projektor wenig störend untergebracht und liegt nicht im Blickfeld von Kunden oder Bedienpersonen.

In einer Ausführungsform ist der Projektor als Teil der Ladenwaage ausgebildet oder mit der Ladenwaage fest verbunden. In einer Ausführungsform ist der Projektor im Gehäuse der Ladenwaage angebracht und das Gehäuse der Ladenwaage hat eine optische Öffnung, zum Beispiel eine Linse. In einer Ausführungsform ist der Projektor anstelle des Kundendisplays angebracht. In einer Ausführungsform ist der Projektor in einem Stativ der Ladenwaage angebracht, das Bedienerdisplay und/oder Kundendisplay haltert.

In einer Ausführungsform ist der Projektor in der Verkaufseinrichtung derart angeordnet, dass sein Lichtsignal in einem ersten Winkelbereich auf die vordere Abdeckung trifft. Ein Lichtsignal das in dem ersten Winkelbereich auf die vordere Abdeckung trifft, also in einem bestimmten Winkel auf die Rückseite der vorderen Abdeckung trifft, ist durch die holographische Struktur der vorderen Abdeckung auf der vorderen Abdeckung sichtbar.

In einer Ausführungsform umfasst die Verkaufseinrichtung eine Steuereinheit. Die Steuereinheit empfängt in einem Befüllungsmodus ein Signal mindestens eines Drucksensors, das eine Veränderung des Gewichtswertes an einem Ort des Auslabgebereichs wiedergibt. Die Steuereinheit empfängt in einem Befüllungsmodus von einer Ein/Ausgabeeinheit eine Produkterkennungsnummer, die dem Produkt entspricht, das an dem Ort abgelegt ist. Die Steuereinheit verknüpft die Produkterkennungsnummer mit dem Ort und hinterlegt diese Verknüpfung in der ersten Speichereinheit. Auf diese Weise kann beim Befüllen des Auslagebereichs mit verschiedenen Produkten die Verkaufseinrichtung angelernt werden, sodass die Verknüpfung zwischen Ort und Produkt in der ersten Speichereinheit abgelegt wird. Auf diese Information wird später beim Verkaufsvorgang zurückgegriffen.

In einer Ausführungsform ist die Ein/Ausgabeeinheit ein Bedienerdisplay einer Ladenwaage. In einer Ausführungsform ist die Ein/Ausgabeeinheit ein Tablet, das mit der Verkaufseinheit elektrisch verbindbar ist.

In einer Ausführungsform umfasst die Verkaufseinrichtung mehrere Ladenwaagen, die jeweils die Funktion der Ladenwaage übernehmen. Die Ladenwaagen sind über ein Netzwerk miteinander verbunden, sodass nach dem Befüllen des Auslagebereichs und der entsprechenden Speicherung der Verknüpfung zwischen Produkterkennungsnummer und Ort in dem ersten Speicherbereich einer Ladenwaage diese Information von der einen Ladenwaage zu den anderen Ladenwaagen weitergeleitet wird.

Erfindungsgemäß wird ein Verfahren zum Betrieb einer Verkaufseinrichtung zum Bedienverkauf von insbesondere Fleisch, Wurst oder Käse vorgeschlagen. Die Verkaufseinrichtung, mit der das Verfahren ausgeführt wird, umfasst einen Auslagebereich mit Drucksensoren, die eine jeweilige Gewichtskraft erfassen. Darunter ist zu verstehen, dass die Drucksensoren ein Signal erzeugen, dass der Kraft entspricht, die auf den Drucksensoren lastet. Das ausgegebene Signal entspricht der Gewichtskraft oder ist proportional zur Gewichtskraft. Die Verkaufseinrichtung umfasst eine Auswerteeinrichtung, die elektrisch mit den Drucksensoren verbunden ist. Das Verfahren umfasst einen Schritt des Empfangens eines Signals von mindestens einem Drucksensor, das eine Veränderung des Gewichtswertes, also der Gewichtskraft, an einem Ort im Auslagebereich wiedergibt. Das Verfahren umfasst den Schritt des Ermittelns einer Produkterkennungsnummer, die in einer ersten Speichereinheit mit dem Ort verknüpft ist, der dem Signal entspricht. Diese Produkterkennungsnummer wird automatisch in einer Ladenwaage ausgewählt, das heißt, die Ladenwaage schaltet automatisch das entsprechende Produkt, das zu der Produkterkennungsnummer gehört, aktiv. Die zur Produkterkennungsnummer zugehörigen Informationen werden aus einer zweiten Speichereinheit der Ladenwaage gelesen. Dies hat den Vorteil, dass das händische Eingeben der Produkterkennungsnummer über das Bediendisplay ersetzt wird.

Erfindungsgemäß umfasst das Verfahren den Schritt des Anzeigens mindestens einer der Produkterkennungsnummer zugehörigen Information und/oder Preis und/oder Gewichtsinformation auf einer vorderen Abdeckung einer Theke. Die Theke ist Teil der Verkaufseinrichtung und umfasst den Auslagebereich.

In einer Ausführungsform umfasst das Verfahren den Schritt des Empfangens eines Signals von mindestens drei, vorzugsweise vier Wägezellen. Die Signale entsprechen den Gewichtskräften an den Ecken einer Produktpräsentationsplatte. Des Weiteren umfasst das Verfahren den Schritt des Ermittelns mit einer Auswerteeinheit von Schwerpunktkoordinaten aus den empfangenen Signalen. Außerdem umfasst das Verfahren den Schritt das Empfangens eines Signals das einer neuen Gewichtskraft entspricht von mindestens einer Wägezelle und des Ermittelns mit der Auswerteeinheit neuer Schwerpunktkoordinaten aus den von den Wägezellen aktuell empfangenen Daten.

In einer Ausführungsform umfasst das Verfahren weiter den Schritt des periodischen Tarierens aller Wägezellen. Bei einer Änderung des von mindestens einer Wägezelle gemessenen Gewichts ermittelt das Verfahren neue Schwerpunktkoordinaten aus den dann neu empfangenen neuen Wägedaten. Das Verfahren ordnet einen Ort auf der Produktpräsentationsplatte zu, wobei der Ort den neuen Schwerpunktkoordinaten entspricht. Dieser Ort ist der Ort, an dem ein Produkt auf der Produktpräsentationsplatte entnommen oder hinzugefügt wurde.

In einer Ausführungsform umfasst das Verfahren bei einer Änderung des von mindestens einer Wägezelle gemessenen Gewichts den Schritt des Ermittelns von neuen Schwerpunktkoordinaten mit neu empfangenen Wägedaten. Des Weiteren ermittelt das Verfahren einen Vektor zwischen den vorhergehenden Schwerpunktkoordinaten und den neuen Schwerpunktkoordinaten. Mit Hilfe dieses Vektors wird ausgehend von den vorhergehenden Schwerpunktkoordinaten und unter Berücksichtigung bzw. Skalierung des Vektors mittels des Gesamtgewichts der Produktpräsentationsplatte ein Ort auf der Produktpräsentationsplatte zugeordnet, der dem Ort entspricht, an dem etwas von der Produktpräsentationsplatte entnommen oder hinzugefügt wurde.

Erfindungsgemäß ist die zur Produkterkennungsnummer zugehörige Information mindestens eine von Preis pro Gewicht, Preis pro Stück, Produktname, Inhaltsstoffe, Allergene, Sonderangebote, Kochrezepte und zu dem Produkt passende Waren.

In einer Ausführungsform umfasst das Verfahren einen weiteren Schritt zur Ermittlung einer Gewichtsinformation in der Ladenwaage und zur Berechnung eines Preises aus der der Produkterkennungsnummer zugehörigen Information. Dabei ist die der Produkterkennungsnummer zugehörige Information zum Beispiel ein Preis pro Gewicht.

In einer Ausführungsform umfasst das Verfahren den Schritt des Empfangens eines Signals von einer Ein/Ausgabeeinheit, welches die Verkaufseinrichtung in einen Befüllungsmodus verbringt. Im Befüllungsmodus wird im nächsten Schritt ein Signal mindestens eines Drucksensors empfangen. Das Signal gibt eine Veränderung des Gewichtswertes an einem Ort des Auslabgebereichs wieder. In einem nächsten Schritt wird eine Produkterkennungsnummer über die Ein/Ausgabeeinheit empfangen, wobei die Produkterkennungsnummer dem Produkt entspricht, das an dem Ort abgelegt wurde. Die Produkterkennungsnummer wird im nächsten Schritt mit dem Ort verknüpft und diese Information wird in der ersten Speichereinheit abgelegt.

In einer Ausführungsform ist die Ein/Ausgabeeinheit ein Bedienerdisplay einer Ladenwaage. In einer Ausführungsform ist die Ein/Ausgabeeinheit ein Tablet, das mit der Verkaufseinrichtung elektrisch verbindbar ist.

In einer Ausführungsform werden die Signale aller Drucksensoren periodisch ausgewertet. Für jedes Produkt im Auslagebereich wird ein Gewichtswert gebildet. Um den Gewichtswert für ein Produkt zu bilden wird je nach Lage der Drucksensoren und Befüllung des Auslagebereichs das Signal eines oder mehrere Drucksensoren herangezogen. Ein Bestandssignal wird auf einer Ein/Ausgabeeinheit ausgegeben, falls der Gewichtswert für ein Produkt eine untere Schranke unterschreitet. Das Bestandssignal weist den Nutzer darauf hin, dass der Vorrat des Produktes eine definierte Grenze unterschreitet und zeitnah nachgefüllt werden muss.

In einer Ausführungsform wird das Bestandssignal an einen Produktionsbereich gesendet, zum Beispiel an eine Schneidemaschine oder in einen Produktvorbereitungsraum, wo eine gewisse Menge des Produktes zum Auffüllen vorbereitet und bereitgestellt wird.

Einige Ausführungsformen der Erfindung sind in den Zeichnungen beispielhaft gezeigt und nachfolgend beschrieben. Es zeigen, jeweils in schematischer Darstellung:

Fig. 1    eine erfindungsgemäße Verkaufseinrichtung von der Kundenseite,

Fig. 2    eine erfindungsgemäße Verkaufseinrichtung von der Bedienerseite,

Fig. 3    eine Ladenwaage als Teil der Verkaufseinrichtung,

Fig. 4    ein Blockdiagramm einer Verkaufseinrichtung nach einer ersten Ausführungsform,

Fig. 5    ein Verfahren zum Betrieb einer Verkaufseinrichtung,

Fig. 6    ein Blockdiagramm einer Verkaufseinrichtung nach einer zweiten Ausführungsform,

Fig. 7    ein erstes Verfahren zur Bestimmung eines Ortes, an dem ein Produkt entnommen oder abgelegt wurde, und

Fig. 8    ein zweites Verfahren zur Bestimmung eines Ortes, an dem ein Produkt entnommen oder abgelegt wurde.

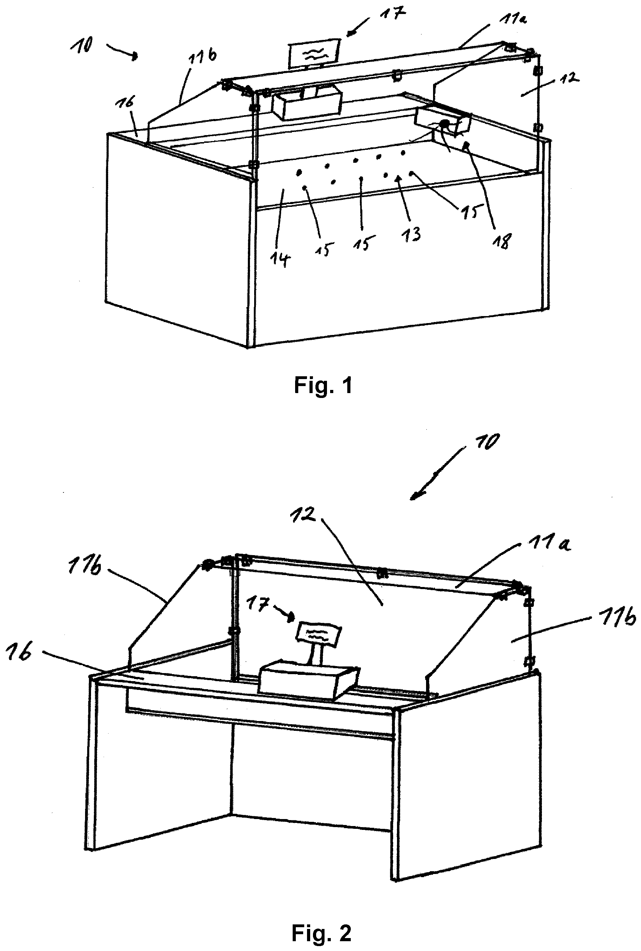

Figur 1 zeigt eine erfindungsgemäße Verkaufseinrichtung 10 von einer Kundenseite. Figur 2 zeigt eine erfindungsgemäße Verkaufseinrichtung 10 von einer Bedienerseite. Die Verkaufseinrichtung 10 ist geeignet für den Bedienverkauf von insbesondere Fleisch, Wurst oder Käse, also zum Frischeverkauf. Die Verkaufseinrichtung 10 besteht aus einer Theke, die einen Auslagebereich 13 umfasst. Eine Abdeckung der Theke besteht aus seitlichen Abdeckungen 11b, einer oberen Abdeckung 11a und einer vorderen Abdeckung 12, die den Auslagebereich 13 auf der Kundenseite abschließen. Die Abdeckungen 11a, 11b, 12 sind aus transparentem Material, sodass man die Produkte im Auslagebereich 13 sehen kann. Auf der Bedienerseite ist der Auslagebereich 13 zugänglich. Die Theke besteht ferner aus einem Thekenbrett 16, auf dem eine oder mehrere Ladenwaagen 17 stehen. Der Boden des Auslagebereichs 13, auf dem die normalerweise unverpackten Produkte liegen, besteht aus einer Matte 14, in die mehrere Drucksensoren 15 in einem regelmäßigen Raster eingearbeitet sind. Die Drucksensoren 15 arbeiten zum Beispiel auf kapazitiver oder resistiver Basis, das heißt durch Messung einer Veränderung der Kapazität oder des elektrischen Widerstands. Die Matte 14 besteht aus hygienischem und lebensmittelechtem Material und ist leicht zu reinigen, sodass sie zur Auslage von Frischeprodukten geeignet ist.

Die vordere Abdeckung 12 ist aus Sicht des Kunden, also aus der Richtung vor der Verkaufseinrichtung 10 transparent. Trifft jedoch Licht in einem ersten Winkelbereich auf die vordere Abdeckung 12, zum Beispiel aus einem Winkelbereich wie er sich zwischen vorderer Abdeckung 12 und einem Projektor 18 ergibt, ist die vordere Abdeckung 12 für dieses Licht nicht transparent. Der Projektor 18 ist dabei an der Ladenwaage 17 angebracht, in der Ladenwaage 17 integriert oder in der Theke, vorzugsweise an einem unauffälligen Ort, angebracht. Die vordere Abdeckung 12 bildet Licht aus diesem ersten Winkelbereich, also Licht das aus Richtung des Projektors 18 auf die vordere Abdeckung 12 trifft, in einer Projektion ab. Dies wird zum Beispiel dadurch erreicht, dass in der vorderen Abdeckung 12 eine holographische Struktur eingearbeitet ist, die dazu führt, dass Licht, welches in dem ersten Winkelbereich auf die Rückseite der vorderen Abdeckung 12 fällt, auf der vorderen Seite der vorderen Abdeckung 12 sichtbar ist. In einer Ausführungsform besteht die vordere Abdeckung aus einem transparenten bildgebenden Material, und ist zum Beispiel als transparentes LCD oder OLED Display ausgeführt, das zugleich die vordere Abdeckung 12 bildet. In diesem Fall umfasst die Verkaufseinrichtung 10 keinen Projektor 18, jedoch eine Steuerung für das Display. Figur 1 und 2 zeigen eine Verkaufseinrichtung 10, die eine Ladenwaage 17 umfasst. Die Erfindung schließt Verkaufseinrichtungen 10, die mehrere Ladenwaagen 17 umfassen, von denen jede selbstständig ein Bild für die vordere Abdeckung 12 generiert und gegebenenfalls auf die vordere Abdeckung 12 projiziert, mit ein.

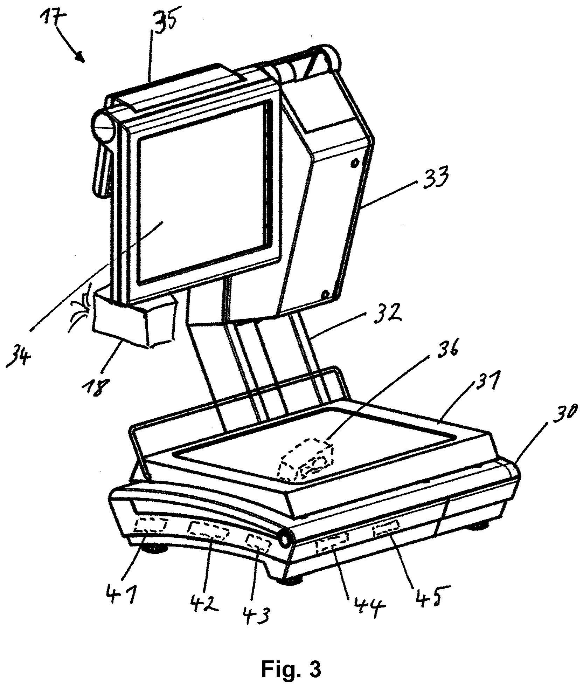

Figur 3 zeigt eine Ladenwaage 17, die in einer Verkaufseinrichtung 10 Anwendung findet. Eine Verkaufseinrichtung 10 umfasst eine oder mehrere Ladenwaagen 17. Die Ladenwaage 17 umfasst eine erste Ein/Ausgabeeinheit 34, die dem Bediener der Waage zugewandt ist. Die erste Ein/Ausgabeeinheit 34 ist als Touchscreen ausgeführt. Die Ladenwaage 17 weist optional ferner eine zweite Ausgabeeinheit 35 auf, die dem Kunden zugewandt ist und Kundeninformationen anzeigt. Der Fachmann kennt Ladenwaage mit einer zweiten Ausgabeeinheit 35, wobei die Kundeninformation auch auf der vorderen Abdeckung 12 angezeigt wird und die zweite Ausgabeeinheit 35 der Ladenwaage 17 deshalb nicht zwingend notwendig ist. Die Ladenwaage 17 weist eine Lastplatte 31 auf, die mit einer Wägevorrichtung 36 verbunden ist, mit derer das Gewicht eines Produkts, das auf der Lastplatte 31 aufliegt, bestimmt wird. Die Ladenwaage 17 weist eine Netzwerkeinheit auf, die die Anbindung der Ladenwaage 17 an die Verkaufseinrichtung 10, an ein Netzwerk oder an weitere Geräte ermöglicht. Die Anbindung ist dabei kabelgebunden oder kabellos. Die Ladenwaage 17 umfasst optional einen Drucker 33 zum Drucken von Belegen. Drucker 33, erste Ein/Ausgabeeinheit 34 und zweite Ausgabeeinheit 35 sind mit einem Stativ 32 mit dem Körper 30 der Ladenwaage 17 verbunden. In einer Ausführungsform ist der Projektor 18 an oder in der Ladenwaage 17 integriert, zum Beispiel indem er am Bildschirm angebracht ist, im Stativ 32 integriert ist oder vom Stativ 32 gehaltert wird oder im Körper 30 der Ladenwaage 17 integriert ist. In allen Fällen ist ein freies Sichtfeld der Linse des Projektors 18 auf die Rückseite der vorderen Abdeckung 12 vorhanden und es ist gewährleistet, dass das Licht des Projektors 18 in einem ersten Winkelbereich auf die vordere Abdeckung 12 trifft, sodass das Bild des Projektors 18 auf der vorderen Abdeckung 12 sichtbar ist. In einer Ausführungsform umfasst die Ladenwaage 17 eine Steuereinrichtung 41, eine Auswerteeinrichtung 42, eine Informationseinheit 43, einen ersten Speicher 44 und einen zweiten Speicher 45 auf deren Funktion im Folgenden eingegangen wird. In einer Ausführungsform sind Steuereinrichtung 41, Auswerteeinrichtung 42, Informationseinheit 43, erster Speicher 44 und zweiter Speicher 45 in der Verkaufseinrichtung 10, zum Beispiel in der Theke angebracht. In einer Ausführungsform umfasst die Verkaufseinrichtung 10 mehrere Ladenwaagen 17, von denen alle eine Steuereinrichtung 41, eine Auswerteeinrichtung 42, eine Informationseinheit 43, einen ersten Speicher 44 und einen zweiten Speicher 45 umfassen. In einer Ausführungsform umfasst die Verkaufseinrichtung 10 mehrere Ladenwaagen 17, von denen nur eine Steuereinrichtung 41, eine Auswerteeinrichtung 42, eine Informationseinheit 43, einen ersten Speicher 44 und einen zweiten Speicher 45 umfasst.

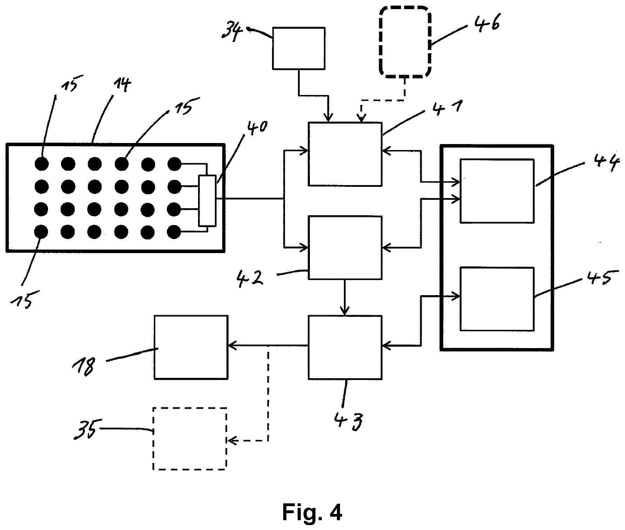

Figur 4 zeigt schematisch eine Verkaufseinrichtung 10 nach einer ersten Ausführungsform. Die Matte 14, die den Boden des Auslagebereichs 13 bildet, umfasst Drucksensoren 15, die in einem regelmäßigen Raster angeordnet sind. Die Drucksensoren 15 messen lokal einen Druck, der durch eine Gewichtskraft ausgelöst wird und geben ein Signal, dass dieser Gewichtskraft proportional ist, an eine Auswerteeinrichtung 40 der Matte 14. Die Auswerteeinrichtung 40 der Matte 14 konsolidiert die Daten der Drucksensoren 15 und gibt eine Gewichtskraft, oder ein zur Gewichtskraft proportionales Signal, und einen damit verbundenen Ort auf der Matte 14 an eine Steuereinrichtung 41 der Verkaufseinrichtung 10 und eine Auswerteeinrichtung 42 der Verkaufseinrichtung 10 weiter. Sowohl die Auswerteeinrichtung 42 wie auch die Steuereinrichtung 41 der Verkaufseinrichtung 10 sind mit einem ersten Speicher 44 verbunden. Im ersten Speicher 44 ist ein Zusammenhang zwischen dem Ort auf der Matte 14 und einer Produkterkennungsnummer abgelegt. Das heißt, die Auswerteeinrichtung 42 kann mithilfe des im ersten Speicher 44 abgelegten Datenmaterials einem Ort auf der Matte 14 eine Produkterkennungsnummer zuordnen. In einem Einlernprozess werden mithilfe der Steuereinrichtung 41 der Verkaufseinrichtung 10 aufgrund von Bedienereingaben Produkterkennungsnummern zu Orten auf der Matte 14 zugeordnet und in Speicher 44 hinterlegt. Die Bedienungseingabe erfolgt mittels der ersten Ein/Ausgabeeinheit 34 der Ladenwaage 17, eines Computer oder eines Tablet 46, das eine entsprechende Software aufweist und elektrisch zum Beispiel über eine drahtlose oder drahtgebundene Verbindungen mit der Steuereinrichtung 41 der Verkaufseinrichtung 10 verbunden werden kann.

Die Auswerteeinrichtung 42 gibt die ermittelte Produkterkennungsnummer an eine Informationseinheit 43 weiter, die aufgrund der Produkterkennungsnummer aus einem zweiten Speicher für Zusatzinformationen Informationen zum erkannten Produkt abruft. Die Informationseinheit 43 arbeitet diese Informationen entsprechend auf, verknüpft sie gegebenenfalls mit einem Gewichtswert und gibt diese Informationen an den Projektor 18 weiter, der sie auf der vorderen Abdeckung 12 sichtbar macht. In einer Ausführungsform stellt die Informationseinheit 43 die Informationen der zweiten Ausgabeeinheit 35 der Ladenwaage 17 zur Verfügung, auf dem diese Informationen sichtbar gemacht werden. In einer Ausführungsform werden die Informationen teilweise auf der zweiten Ausgabeeinheit 35 und teilweise auf der vorderen Abdeckung sichtbar gemacht. Die schematische Darstellung von Figur 4 zeigt analog zu Figur 1 und 2 ein System mit einer Ladenwaage, wobei eine bevorzugte Ausführungsform der Erfindung Verkaufseinrichtungen 10, die mehrere Ladenwaagen 17 umfassen, mit einschließt.

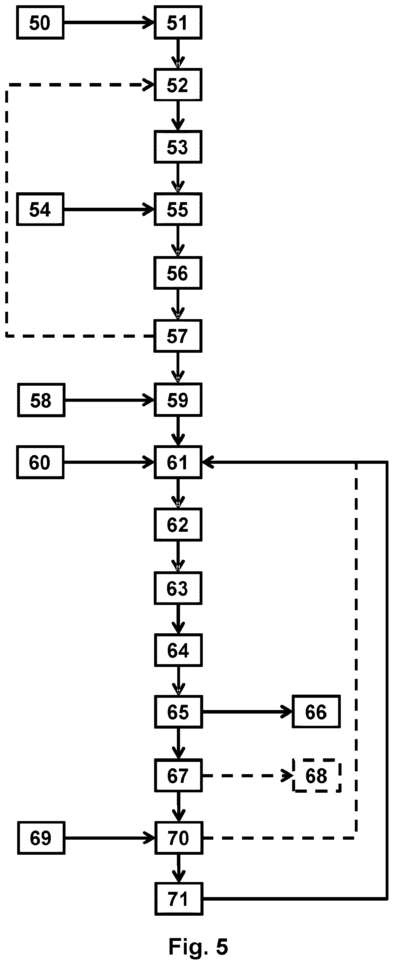

Figur 5 zeigt schematisch ein Verfahren zum Betrieb einer Verkaufseinrichtung 10. Dabei betreffen die Schritte 50 bis 57 im Wesentlichen das Zuweisen von Orten auf der Matte 14, die den Auslagebereich 13 bildet, zu entsprechenden Produkterkennungsnummern der Produkte, die an diesen Orten auf der Matte 14 ausgelegt sind. Diese Information wird im ersten Speicher 44 gespeichert. Es handelt sich hierbei um einen Anlernprozess der Verkaufseinrichtung 10. Die Schritte 60 bis 71 des Verfahrens bilden einen Verkaufsvorgang mithilfe einer Verkaufseinrichtung 10 ab.

In Schritt 50 wird durch eine Bedienereingabe die Verkaufseinrichtung in einen Befüllungsmodus versetzt. Im Befüllungsmodus legt die Bedienperson die Produkte auf die Matte 14 im Auslagebereich 13 der Verkaufseinrichtung 10. Es handelt sich sozusagen um das Einräumen der Theke. Nach der Bedienereingabe wechselt die Verkaufseinrichtung 10 in Schritt 51 in den Befüllungsmodus. In Schritt 52 nehmen die Drucksensoren 15 der Matte 14 eine Veränderung wahr, da der Bediener ein Produkt an einen bestimmten Ort auf der Matte 14 gelegt hat. In Schritt 53 bestimmt die Auswerteeinrichtung 40 der Matte 14 den Ort auf der Matte 14, auf dem die Druckänderung, das heißt die Gewichtsänderung, stattgefunden hat. In Schritt 54 gibt die Bedienperson eine Produkterkennungsnummer ein, die das Produkt identifiziert, das gerade in den Auslagebereich 13 gelegt wurde. Die Verkaufseinrichtung 10 empfängt in Schritt 55 die Produkterkennungsnummer und verknüpft sie in Schritt 56 mit dem Ort, an dem das Produkt abgelegt wurde. In Schritt 57 wird diese Verknüpfung im ersten Speicher 44 der Verkaufseinrichtung 10 gespeichert. Wird ein weiteres Produkt auf die Matte 14 gelegt, so werden für dieses entsprechend die Schritte 52 bis 57 ausgeführt. Ist die Theke komplett befüllt, so gibt die Bedienperson eine entsprechende Information in Schritt 58 in die Verkaufseinrichtung 10 ein. Die Eingabe durch die Bedienperson in den Schritten 50, 54 und 58 erfolgt über die erste Ein/Ausgabeeinheit 34 der Ladenwaage 17 oder über ein Tablet 46 oder einen Computer. Erfolgt die Eingabe über ein Tablet 46 oder einen Computer so werden die Informationen ständig, zum Beispiel über eine drahtlose Netzwerkverbindung, an die Verkaufseinrichtung 10 übermittelt oder sie werden im Tablett 46 oder dem Computer während des Befüllungsprozesses der Theke gespeichert und nach dem Befüllungsprozess in die Verkaufseinrichtung 10 oder in die Ladenwaage 17 geladen.

Nach dem Beenden des Befüllungsmodus wird in der Verkaufseinrichtung 10 der Verkaufsmodus in Schritt 59 gestartet. Wenn die Bedienperson im Schritt 60 einen neuen Verkaufsvorgang startet, wird gemäß dem Verfahren in Schritt 61 auf die Eingabe eines neuen Produkts gewartet. Das neue Produkt wird anhand der folgenden Verfahrensschritte automatisiert in die Ladenwaage eingegeben. In Schritt 62 wird eine Veränderung des Signals der Drucksensoren 15 wahrgenommen und in Schritt 63 wird mithilfe der Auswerteeinheit 40 der Matte 14 der Ort der Veränderung des Signals der Drucksensoren 15 ermittelt und mit der Auswerteeinheit 42 der Verkaufsvorrichtung 10 und den Daten im ersten Speicher 44 wird die entsprechende Produkterkennungsnummer ermittelt. In Schritt 64 wird das Produkt automatisch in die Ladenwaage 17 geladen, sozusagen auf der Ladenwaage 17 aufgeschaltet. In Schritt 65 werden entsprechende Zusatzinformationen zu der Produkterkennungsnummer, das heißt zu dem aus der Theke entnommenen Produkt, aus dem zweiten Speicher 45 gelesen und diese Informationen wird mithilfe der Informationseinheit 43, Projektors 18 und der vorderen Abdeckung 12 und/oder der zweiten Ausgabeeinheit 35 dem Kunden in Schritt 66 sichtbar gemacht. In Schritt 67 wird mithilfe der Wägevorrichtung 36 das Gewicht des Produktes auf der Waage bestimmt und dem Kunden auf der vorderen Abdeckung 12 mithilfe des Projektors 18 oder auf der zweiten Ausgabeeinheit 35 der Ladenwaage 37 in Schritt 68 angezeigt. Wird das Gewicht und gegebenenfalls auch ein zu dem Gewicht zugehöriger Preis dem Kunden mithilfe des Projektors 18 auf der vorderen Abdeckung 12 angezeigt, so ist in einer Ausführungsform vorgesehen, dass Preis und Gewichtsinformation auf einem weißen Feld der vorderen Abdeckung 12 angezeigt werden, sodass diese Information besser sichtbar ist, da sie nicht im transparenten Bereich der vorderen Abdeckung 12 steht. Zusatzinformationen zu den entsprechenden Produkten werden im transparenten Bereich der vorderen Abdeckung 12 angezeigt. In einer Ausführungsform werden diese Zusatzinformationen in dem Bereich der vorderen Abdeckung 12 angezeigt, durch den der Kunde schaut, wenn er auf das Produkt in der Auslage schaut. So sieht der Kunde wenn er das Produkt in der Auslage ansieht automatisch in seinem Sichtfeld die dazugehörige Zusatzinformation. Zusatzinformationen zu einem Produkt sind zum Beispiel Rezepte, Nährwertangabe, Frischeangaben, Herkunftsangaben, Produzentenangaben, Sonderangebote usw. Soll in Schritt 70 ein weiteres Produkt dem Verkaufsvorgang hinzugefügt werden, so springt das Verfahren zurück zu Schritt 61, in dem auf die Entnahme eines neuen Produktes aus dem Auslagebereich 13 gewartet wird. Soll der Verkaufs Vorgang abgeschlossen werden, so wird dies durch die Bedienperson im Schritt 69 bestätigt und der Verkaufsprozess endet sodann in Schritt 71 mit dem Ausdrucken des Bons für den Einkauf. Danach kann die Bedienperson in Schritt 60 einen neuen Verkaufs Vorgang starten. Die Eingabe durch die Bedienperson in den Schritt 60 erfolgt über die erste Ein/Ausgabeeinheit 34 der Ladenwaage 17.

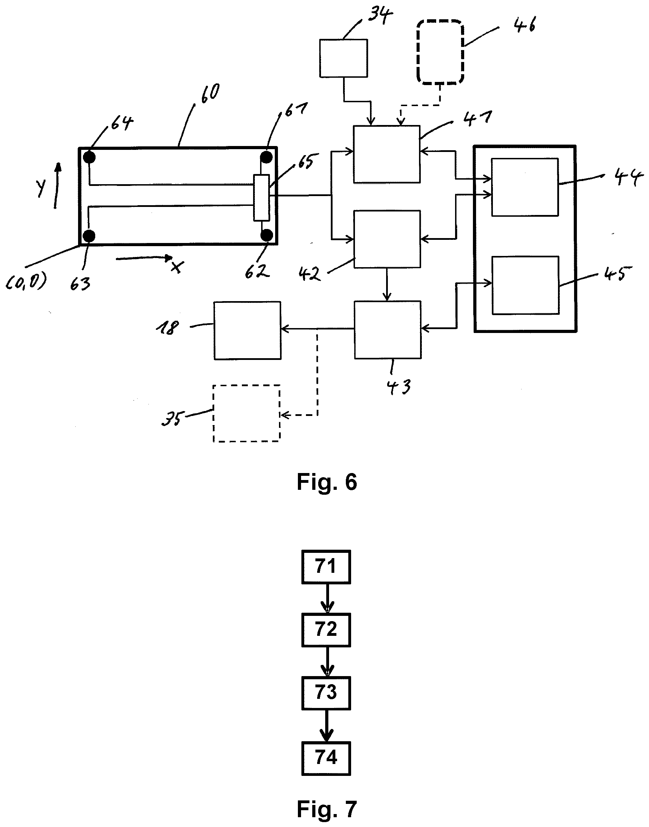

Figur 6 zeigt schematisch eine Verkaufseinrichtung 10 nach einer zweiten Ausführungsform. In dieser Ausführungsform ist die Bestimmung eines Orts an dem ein Produkt entnommen wurde oder hinzugefügt wurde nicht wie in Figur 4 über eine Gewichtsmatte realisiert, sondern erfolgt mittels Schwerpunktermittlung. Um Wiederholungen zu vermeiden wird für die Beschreibung des Projektors 18, der ersten Ein/Ausgabeeinheit 34, der zweiten Ausgabeeinheit 35, der Steuereinrichtung 41, der Auswerteeinrichtung 42, der Informationseinheit 43, des ersten Speichers 44 und des zweiten Speicher 45 sowie des Computers oder Tablets 46 auf die Beschreibung im Zusammenhang mit Figur 4 verwiesen. Die Verkaufseinrichtung 10 umfasst eine Produktpräsentationsplatte 60, die im Auslagebereich 13 angebracht werden kann. Die Produktpräsentationsplatte 60 ist zur Aufnahme von zu verkaufenden Produkten geeignet und ist eine starre Platte. Sie ist zu Reinigungszwecken aus dem Auslagebereich 13 entfernbar. Die Produktpräsentationsplatte 60 wird von vier Wägezellen 61, 62, 63, 64 schwebend gehaltert. Die Wägezellen 61, 62, 63, 64 stützen mit ihren Krafteinleitungsseiten die Produktpräsentationsplatte 60 an ihren Ecken oder in der Nähe der Ecken. Die Wägezellen 61, 62, 63, 64 bestimmen unabhängig voneinander eine wirkende Gewichtskraft, die durch die Produktpräsentationsplatte 60 und der darauf abgelegten Produkte entsteht. Dabei wirkt auf jede Wägezelle 61, 62, 63, 64 anteilig von dem Gesamtgewicht eine einzelne Gewichtskraft. Die Daten aus den Wägezellen 61, 62, 63, 64 werden an eine Auswerteinheit 65 übermittelt. Die Auswerteeinheit bestimmt aus den einzelnen Gewichtsdaten der Wägezellen 61, 62, 63, 64 Schwerpunktkoordinaten auf der Produktpräsentationsplatte. Die Koordinaten auf der Produktpräsentationsplatte beginnen in einer Ecke bei der Wägezelle 63 mit den Koordinaten (0, 0) und erstrecken sich in waagrechter Richtung X und in senkrechter Richtung Y.

Zur Veranschaulichung der Schwerpunktsermittlung werden den Wägezellen 61, 62, 63, 64 wie in Figur 6 dargestellt die entsprechenden Gewichtsdaten W61, W62, W63, W64 zugewiesen.

Die Bildung des Schwerpunkts in X Richtung bestimmt sich wie folgt:

$$(W61 + W62) / ( W61 + W62 + W63 + W64 )$$

Die Bildung des Schwerpunkts in Y Richtung bestimmt sich wie folgt:

$$(W61 + W64) / ( W61 + W62 + W63 + W64 )$$

Mit einem entsprechenden Normierungsfaktor, der die Größe der Produktpräsentationsplatte 60 berücksichtigt, sind Koordinaten auf der Produktpräsentationsplatte 60 bestimmbar, die den Schwerpunktkoordinaten der Produktpräsentationsplatte entsprechen. Diese Koordinaten werden in der Auswerteeinheit 65 auf Basis der Daten der Wägezellen 61, 62, 63, 64 ermittelt und an die Steuereinrichtung 41 und die Auswerteeinrichtung 42 weitergegeben.

Figur 7 zeigt schematisch ein Verfahren zur Bestimmung eines Ortes auf der Produktpräsentationsplatte 60, an dem ein Produkt hinzugefügt oder entnommen wurde. Im Verfahren nach Figur 5 bietet dieses Verfahren zur Bestimmung eines Ortes eine Alternative zu den Schritten 52 und 53 sowie zu den Schritten 62 und 63, wenn die Verkaufseinrichtung 10 keine Matte 14 sondern eine Produktpräsentationsplatte 60 umfasst. In Schritt 71 werden alle Wägezellen 61, 62, 63, 64 tariert, das heißt die Produktpräsentationsplatte 60 und alle darauf aufgebrachten Produkte werden so behandelt, als wären sie eine Vorlast für die Wägezellen 61, 62, 63, 64 und auf Null gesetzt. In Schritt 72 wird von zumindest einer Wägezellen 61, 62, 63, 64 ein neuer Gewichtswert gemessen und von der Auswerteeinrichtung 65 empfangen. In Schritt 73 berechnet die Auswerteeinrichtung 65 aufgrund der aktuellen Gewichtsdaten der Wägezellen 61, 62, 63, 64 Schwerpunktkoordinaten. Diese Schwerpunktkoordinaten spiegeln nicht den Schwerpunkt der Produktpräsentationsplatte 60 wieder, sondern vielmehr den Schwerpunkt der Gewichtsänderung im Koordinatensystem der Produktpräsentationsplatte. Dies ist der Ort, an dem ein Produkt von der Produktpräsentationsplatte entnommen oder aufgelegt wurde. In Schritt 74 wird dieser Ort an die Steuereinrichtung 41 und/oder die Auswerteeinrichtung 42 weitergegeben.

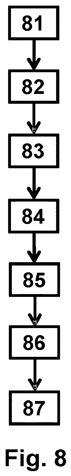

Figur 8 zeigt schematisch ein Verfahren zur Bestimmung eines Ortes auf der Produktpräsentationsplatte 60, an dem ein Produkt hinzugefügt oder entnommen wurde. Im Verfahren nach Figur 5 bietet dieses Verfahren zur Bestimmung eines Ortes eine Alternative zu den Schritten 52 und 53 sowie zu den Schritten 62 und 63, wenn die Verkaufseinrichtung 10 keine Matte 14 sondern eine Produktpräsentationsplatte 60 umfasst. In Schritt 81 werden Schwerpunktkoordinaten vom aktuellen Schwerpunkt der Produktpräsentationsplatte 60 inklusiver aller Produkte die darauf aufgelegt sind ermittelt. Dabei handelt es sich um den echten Schwerpunkt. Die Produktpräsentationsplatte oder zumindest die Produkte die darauf aufgelegt sind, sind nicht tariert. In Schritt 82 wird von zumindest einer Wägezellen 61, 62, 63, 64 ein neuer Gewichtswert gemessen und von der Auswerteeinrichtung 65 empfangen. In Schritt 83 werden neue Schwerpunktkoordinaten von der Auswerteeinrichtung 65 aus den neuen Daten der Wägezellen 61, 62, 63, 64 bestimmt. In Schritt 84 wird aus den vorhergehenden Schwerpunktkoordinaten und den neuen Scherpunktkoordinaten ein Vektor gebildet, der die Verschiebung der Schwerpunktkoordinaten wiederspiegelt. Ausgehend vom vorhergehenden Schwerpunkt führt der Vektor, wenn er nicht skaliert wird, zum neuen Schwerpunkt. Anschließend wird Schritt 85 der Vektor mit Hilfe des Gesamtgewichts der Produktpräsentationsplatte 60 und der darauf aufgelegten Produkte umgekehrt proportional skaliert. Der Ort, an dem ein Produkt von der Produktpräsentationsplatte 60 entnommen wurde oder darauf abgelegt wurde ergibt sich in Schritt 86, indem zu den vorhergehenden Schwerpunktkoordinaten der skalierte Vektor addiert wird. In Schritt 87 wird dieser Ort an die an die Steuereinrichtung 41 und/oder die Auswerteeinrichtung 42 weitergegeben.

Die Funktionen verschiedener in den Zeichnungen gezeigter Elemente, inklusive der Funktionsblöcke, können durch dezidierte Hardware oder durch generische Hardware, die in der Lage ist Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

## Patentansprüche

1.  Verkaufseinrichtung (10) zum Bedienverkauf von insbesondere Fleisch, Wurst oder Käse, bestehend aus mindestens einer Ladenwaage (17) und einer Theke, die einen Auslagebereich (13), ein Thekenbrett (16) und eine Abdeckung (11a, 11b, 12) umfasst, wobei

    die Verkaufseinrichtung (10) im Auslagebereich (13) Drucksensoren (15) umfasst, die lokal eine jeweilige Gewichtskraft erfassen und dass

    die Verkaufseinrichtung (10) eine Auswerteeinheit (42) umfasst, die bei einer Veränderung eines Signals mindestens eines Drucksensors (15) dem Signal ein Ort innerhalb des Auslagebereichs (13) zuordnet und ein entsprechendes Produkt anhand des Ortes identifiziert, wobei die Ladenwaage eine Wägeeinheit umfasst, die eine Gewichtsinformation generiert und die Verkaufseinrichtung, insbesondere die Ladenwaage eine Informationseinheit umfasst, die entsprechende Zusatzinformationen zu dem identifizierten Produkt generiert und dass die Verkaufseinrichtung ein dem Kunden zugewandtes Display umfassen, auf dem diese Zusatzinformationen angezeigt werden, **dadurch gekennzeichnet, dass** das dem Kunden zugewandte Display der Verkaufseinrichtung in einer vorderen Abdeckung der Theke integriert ist, wobei die vordere Abdeckung einen transparenten Bereich aufweist und die Zusatzinformationen zumindest teilweise in dem transparenten Bereich der vorderen Abdeckung angezeigt werden, wobei Zusatzinformationen mindestens eine von Rezepten, Nährwertangaben, Frischeangaben, Herkunftsangaben, Produzentenangaben, Sonderangeboten, Preisen pro Gewicht, Preisen pro Stück, Produktnamen, Inhaltsstoffen, Allergenen und zu dem Produkt passenden Waren sind.

2.  Verkaufseinrichtung nach Anspruch 1, **dadurch gekennzeichnet, dass** Preisinformation und/oder Gewichtsinformation in einem nicht transparenten Bereich der vorderen Abdeckung angezeigt werden und weitere Zusatzinformationen in einem transparenten Bereich der vorderen Abdeckung angezeigt werden.

3.  Verkaufseinrichtung nach einem der Ansprüche 1 oder 2, **dadurch gekennzeichnet, dass** die Verkaufseinrichtung einen Projektor umfasst, der im Bereich einer oberen Abdeckung angebracht ist und ein Lichtsignal auf die vordere Abdeckung projiziert, wobei die vordere Abdeckung derart ausgestaltet ist, dass sie als Projektionsfläche dient und das Lichtsignal auf der Seite der vorderen Abdeckung sichtbar ist, auf der das Lichtsignal nicht auf die vordere Abdeckung trifft.

4.  Verkaufseinrichtung nach Anspruch 3, **dadurch gekennzeichnet, dass** die vordere Abdeckung eine holographische Struktur aufweist, die Licht das in einem ersten Winkelbereich auf die vordere Abdeckung trifft sichtbar macht und dass die holographische Struktur für Licht das in einem zweiten Winkelbereich auf die vordere Abdeckung trifft transparent ist.

5. Verkaufseinrichtung nach Anspruch 3 oder 4, **dadurch gekennzeichnet, dass** der Projektor in einem Bereich von Streben untergebracht ist, die die Begrenzung der Abdeckung bilden.

6. Verkaufseinrichtung nach Anspruch 3 oder 4, **dadurch gekennzeichnet, dass** der Projektor als Teil der Ladenwaage ausgebildet ist oder mit der Ladenwaage fest verbunden ist.

7. Verkaufseinrichtung nach einem der Ansprüche 4 bis 6, **dadurch gekennzeichnet, dass** der Projektor in der Verkaufseinrichtung derart angeordnet ist, dass sein Lichtsignal in einem ersten Winkelbereich auf die vordere Abdeckung trifft.

8. Verkaufseinrichtung nach einem der Ansprüche 1 bis 7, **dadurch gekennzeichnet, dass** die Drucksensoren mindestens drei, vorzugsweise vier Wägezellen sind, die mit ihren Krafteinleitungsseiten Ecken einer Produktpräsentationsplatte abstützen, und dass die Auswerteeinheit aus den Daten der Wägezellen Schwerpunktkoordinaten der Produktpräsentationsplatte ermittelt.

9. Verkaufseinrichtung nach Anspruch 8, **dadurch gekennzeichnet, dass** die Auswerteeinheit in periodischen Abständen oder bei einer Änderung des Gesamtgewichts der Produktpräsentationsplatte, welches von den mindestens drei Wägezellen erfasst wird, aus den Daten der Wägezellen neue Schwerpunktkoordinaten der Produktpräsentationsplatte ermittelt.

10. Verkaufseinrichtung nach einem der Ansprüche 1 bis 7, **dadurch gekennzeichnet, dass** die Drucksensoren in eine Matte eingearbeitet sind, die den Boden des Auslagebereichs bildet und flächig oder in einem regelmäßigem Raster Gewichtswerte bildet.

11. Verkaufseinrichtung nach Anspruch 10, **dadurch gekennzeichnet, dass** die Matte aus hygienischem und lebensmittelechtem Material besteht und mittels eines kapazitiven oder resistiven Messverfahrens die Gewichtswerte bildet.

12. Verkaufseinrichtung nach einem der Ansprüche 10 bis 11, **dadurch gekennzeichnet, dass** das Raster der Drucksensoren so ausgestaltet ist, dass mittels der Kombination der Signale der Drucksensoren die Umrisse der Produkte im Auslagebereich ermittelbar sind.

13. Verkaufseinrichtung nach einem der Ansprüche 1 bis 12, **dadurch gekennzeichnet, dass** die Auswerteeinheit eine erste Speichereinheit umfasst, in der entsprechende Produkterkennungsnummern den Orten im Auslagebereich zugeordnet sind.

14. Verkaufseinrichtung nach einem der Ansprüche 1 bis 13, **dadurch gekennzeichnet, dass** die Verkaufseinrichtung eine Steuereinheit umfasst, wobei die Steuereinheit in einem Befüllungsmodus ein Signal mindestens eines Drucksensors empfängt, das eine Veränderung des Gewichtswertes an einem Ort des Auslabgebereichs wiedergibt, und wobei die Steuereinheit in einem Befüllungsmodus von einer Ein/Ausgabeeinheit eine Produkterkennungsnummer empfängt, die dem Produkt entspricht, das an dem Ort abgelegt ist, und wobei die Steuereinheit die Produkterkennungsnummer mit dem Ort verknüpft und diese Verknüpfung in der ersten Speichereinheit hinterlegt.

15. Verfahren zum Betrieb einer Verkaufseinrichtung (10) zum Bedienverkauf von insbesondere Fleisch, Wurst oder Käse, wobei die Verkaufseinrichtung (10) einen Auslagebereich (13) mit Drucksensoren (13) umfasst, die eine jeweilige Gewichtskraft erfassen und wobei die Verkaufseinrichtung (10) eine Auswerteeinrichtung (42) umfasst, die elektrisch mit den Drucksensoren (15) verbunden ist, wobei das Verfahren folgende Schritte umfasst:

   - empfangen (62) eines Signals mindestens eines Drucksensors (15), das eine Veränderung des Gewichtswertes an einem Ort des Auslagebereichs (13) wiedergibt,
   - ermitteln (63) einer Produkterkennungsnummer, die in einer ersten Speichereinheit (44) mit dem Ort verknüpft ist, der dem Signal entspricht,

   **dadurch gekennzeichnet, dass** das Verfahren folgende Schritte umfasst:

   - automatische Auswahl (64) der Produkterkennungsnummer in einer Ladenwaage (17),
   - lesen (65) der zur Produkterkennungsnummer zugehörigen Informationen aus einer zweiten Speichereinheit (45), und
   - anzeigen mindestens einer der Produkterkennungsnummer zugehörigen Information auf einem dem Kunden zugewandten Display auf einer vorderen Abdeckung einer Theke, wobei die Theke Teil der Verkaufseinrichtung ist und den Auslagebereich umfasst, wobei das dem Kunden zugewandte Display der Verkaufseinrichtung in einer vorderen Abdeckung der Theke integriert ist, wobei die vordere Abdeckung einen transparenten Bereich aufweist und die Zusatzinformationen zumindest teilweise in dem transparenten Bereich der vorderen Abdeckung angezeigt werden, wobei die der Produkterkennungsnummer zugehörige Information mindestens eine von Rezepten, Nährwertangaben, Frischeangaben, Herkunftsangaben, Produzentenangaben, Sonderangeboten, Preisen pro Gewicht, Preisen pro Stück, Produktnamen, Inhaltsstoffen, Allergenen und zu dem Produkt passenden Waren sind.

## Claims

1. Sales device (10) for serviced sales of in particular meat, sausage or cheese, consisting of at least one set of shop scales (17) and a counter that comprises a display area (13), a counter surface (16) and a cover (11a, 11b, 12), wherein

   the sales device (10) comprises pressure sensors (15) in the display area (13) that locally measure a respective weight force and wherein
   the sales device (10) comprises an evaluation unit (42) that, in the event of a change in a signal of at least one pressure sensor (15), assigns the signal a location within the display area (13) and identifies a corresponding product on the basis of the location,
   wherein the set of shop scales comprises a weighing unit that generates weight information and the sales device, in particular the set of shop scales, comprises an information unit that generates appropriate additional information relating to the identified product, and wherein the sales device comprises a display that faces the customer, on which this additional information is displayed, **characterized in that** the display of the sales device that faces the customer is integrated in a front cover of the counter, wherein the front cover has a transparent area and at least some of the additional information is displayed in the transparent area of the front cover, wherein additional information is at least one from recipes, nutritional information, freshness information, origin information, producer information, special offers, prices per weight, prices per piece, product names, ingredients, allergens and goods that go with the product.

2. Sales device according to Claim 1, **characterized in that** price information and/or weight information is displayed in a non-transparent area of the front cover and further additional information is displayed in a transparent area of the front cover.

3. Sales device according to either of Claims 1 and 2, **characterized in that** the sales device comprises a projector that is mounted in the area of a top cover and projects a light signal onto the front cover, wherein the front cover is configured such that it serves as a projection surface and the light signal is visible on that side of the front cover on which the light signal does not hit the front cover.

4. Sales device according to Claim 3, **characterized in that** the front cover has a holographic structure that makes light hitting the front cover in a first angle range visible and **in that** the holographic structure is transparent to light hitting the front cover in a second angle range.

5. Sales device according to Claim 3 or 4, **characterized in that** the projector is accommodated in an area of braces that form the boundary of the cover.

6. Sales device according to Claim 3 or 4, **characterized in that** the projector is in the form of part of the set of shop scales or is firmly connected to the set of shop scales.

7. Sales device according to one of Claims 4 to 6, **characterized in that** the projector is arranged in the sales device such that its light signal hits the front cover in a first angle range.

8. Sales device according to one of Claims 1 to 7, **characterized in that** the pressure sensors are at least three, preferably four, weighing cells that use their sides on which force is introduced to support corners of a product presentation plate, and **in that** the evaluation unit determines centre of gravity coordinates of the product presentation plate from the data of the weighing cells.

9. Sales device according to Claim 8, **characterized in that** the evaluation unit determines new centre of gravity coordinates of the product presentation plate from the data of the weighing cells at periodic intervals or in the event of a change in the total weight of the product presentation plate, which total weight is measured by the at least three weighing cells.

10. Sales device according to one of Claims 1 to 7, **characterized in that** the pressure sensors are incorporated in a mat that forms the bottom of the display area and forms weight values in two dimensions or in a regular grid.

11. Sales device according to Claim 10, **characterized in that** the mat is made from hygienic and food-grade material and forms the weight values by means of a capacitive or resistive measurement method.

12. Sales device according to either of Claims 10 and 11, **characterized in that** the grid of pressure sensors is designed such that the outlines of the products in the display area can be determined by means of the combination of signals of the pressure sensors.

13. Sales device according to one of Claims 1 to 12, **characterized in that** the evaluation unit comprises a first memory unit in which appropriate product identification numbers are assigned to the locations in the display area.

14. Sales device according to one of Claims 1 to 13, **characterized in that** the sales device comprises a control unit, wherein in a filling mode the control unit receives a signal of at least one pressure sensor that conveys a change in the weight value at a location in the display area, and wherein in a filling mode the control unit receives from an input/output unit a product identification number that is consistent with the product deposited at the location, and wherein the control unit links the product identification number to the location and stores this link in the first memory unit.

15. Method for operating a sales device (10) for serviced sales of in particular meat, sausage or cheese, wherein the sales device (10) comprises a display area (13) containing pressure sensors (13) that measure a respective weight force and wherein the sales device (10) comprises an evaluation unit (42) that is electrically connected to the pressure sensors (15), wherein the method comprises the following steps:

- receiving (62) a signal of at least one pressure sensor (15) that conveys a change in the weight value at a location in the display area (13),
- determining (63) a product identification number linked in a first memory unit (44) to the location that is consistent with the signal,

**characterized in that** the method comprises the following steps:

- automatically selecting (64) the product identification number in a set of shop scales (17),
- reading (65) the information associated with the product identification number from a second memory unit (45), and
- displaying at least one piece of information associated with the product identification number on a display that faces the customer on a front cover of a counter, wherein the counter is part of the sales device and comprises the display area, wherein the display of the sales device that faces the customer is integrated in a front cover of the counter, wherein the front cover has a transparent area and at least some of the additional information is displayed in the transparent area of the front cover, wherein the information associated with the product identification number is at least one from recipes, nutritional information, freshness information, origin information, producer information, special offers, prices per weight, prices per piece, product names, ingredients, allergens and goods that go with the product.

**Revendications**

1. Dispositif de vente (10) destiné à la vente de viande, de charcuterie ou de fromage, comprenant notamment au moins une balance de magasin (17) et un comptoir qui comprend une zone de vitrine (13), une planche de comptoir (16) et un capotage (11a, 11b, 12), le dispositif de vente (10) comportant dans la zone de vitrine (13) des capteurs de pression (15) qui détectent localement un poids respectif et

le dispositif de vente (10) comprenant une unité d'évaluation (42) qui, lors d'une modification d'un signal d'au moins un capteur de pression (15), associe au signal un emplacement à l'intérieur de la zone de vitrine (13) et identifie un produit correspondant à l'aide de l'emplacement,

la balance de magasin comprenant une unité de pesée qui génère une information de poids et le dispositif de vente, en particulier la balance de magasin, comprenant une unité d'informations qui génère des informations supplémentaires correspondantes concernant le produit identifié et le dispositif de vente comprenant un affichage qui est dirigé vers le client et sur lequel les informations supplémentaires sont affichées, **caractérisé en ce que** l'affichage, dirigé vers le client, du dispositif de vente est intégré dans un capotage avant du comptoir, le capotage avant comportant une zone transparente et les informations supplémentaires étant au moins partiellement affichées dans la zone transparente du capotage avant, les informations supplémentaires étant l'une au moins parmi des recettes, des données nutritionnelles, des données sur la fraîcheur, des données sur l'origine, des données sur le producteur, des offres spéciales, des prix au poids, des prix à l'unité, des noms de produits, des ingrédients, des allergènes et des articles adaptés au produit.

**2.** Dispositif de vente selon la revendication 1, **caractérisé en ce qu'**une information de prix et/ou une information de poids sont affichées dans une zone non transparente du capotage avant et d'autres informations supplémentaires sont affichées dans une zone transparente du capotage avant.

**3.** Dispositif de vente selon l'une des revendications 1 ou 2, **caractérisé en ce que** le dispositif de vente comprend un projecteur qui est fixé au niveau d'un capotage supérieur et qui projette un signal lumineux sur le capotage avant, le capotage avant étant conçu de façon à servir de surface de projection et à visualiser le signal lumineux sur le côté du capotage avant sur lequel le signal lumineux n'est pas incident au capotage avant.

**4.** Dispositif de vente selon la revendication 3, **caractérisé en ce que** le capotage avant présente une structure holographique qui rend visible la lumière qui est incidente au capotage avant dans une première plage angulaire et **en ce que** la structure holographique est transparente pour la lumière qui est incidente au capotage avant dans une deuxième plage angulaire.

**5.** Dispositif de vente selon la revendication 3 ou 4, **caractérisé en ce que** le projecteur est logé dans une zone de tirants qui forment la délimitation du capotage.

**6.** Dispositif de vente selon la revendication 3 ou 4, **caractérisé en ce que** le projecteur est conçu comme une partie de la balance de magasin ou est relié de manière fixe à la balance de magasin.

**7.** Dispositif de vente selon l'une des revendications 4 à 6, **caractérisé en ce que** le projecteur est disposé dans le dispositif de vente de manière à ce que son signal lumineux soit incident au capotage avant dans une première plage angulaire.

**8.** Dispositif de vente selon l'une des revendications 1 à 7, **caractérisé en ce que** les capteurs de pression sont au moins trois, de préférence quatre, cellules de pesée qui, avec leurs côtés de transmission de force, soutiennent les coins d'une plaque de présentation de produit et **en ce que** l'unité d'évaluation détermine des coordonnées du centre de gravité de la plaque de présentation du produit à partir des données des cellules de pesée.

**9.** Dispositif de vente selon la revendication 8, **caractérisé en ce que** l'unité d'évaluation détermine de nouvelles coordonnées du centre de gravité de la plaque de présentation de produit à partir des données des cellules de pesée à intervalles périodiques ou dans le cas d'une modification du poids total de la plaque de présentation de produit qui est détecté par les au moins trois cellules de pesée.

**10.** Dispositif de vente selon l'une des revendications 1 à 7, **caractérisé en ce que** les capteurs de pression sont incorporés dans un tapis qui forme le sol de la zone de vitrine et qui forme des valeurs de poids de manière sensiblement bidimensionnelle ou selon une trame régulière.

**11.** Dispositif de vente selon la revendication 10, **caractérisé en ce que** le tapis est en un matériau hygiénique et à usage alimentaire et forme les valeurs de poids au moyen d'un procédé de mesure capacitif ou résistif.

**12.** Dispositif de vente selon l'une des revendications 10 à 11, **caractérisé en ce que** la trame des capteurs de pression est conçue de telle sorte que les contours des produits dans la zone de vitrine peuvent être déterminés au moyen de la combinaison des signaux des capteurs de pression.

**13.** Dispositif de vente selon l'une des revendications 1 à 12, **caractérisé en ce que** l'unité d'évaluation comprend une première unité de mémorisation dans laquelle des numéros d'identification de produits correspondants sont associés aux emplacements dans la zone de vitrine.

14. Dispositif de vente selon l'une des revendications 1 à 13, **caractérisé en ce que** le dispositif de vente comprend une unité de commande, l'unité de commande reçoit dans un mode de garnissage un signal d'au moins un capteur de pression qui reproduit une modification de la valeur de poids à un emplacement de la zone de vitrine, et, dans un mode de garnissage, l'unité de commande recevant d'une unité d'entrée/sortie un numéro d'identification de produit correspondant au produit déposé à l'emplacement, et l'unité de commande combinant le numéro d'identification de produit à l'emplacement et stockant cette combinaison dans la première unité de mémorisation.

15. Procédé de fonctionnement d'un dispositif de vente (10) destiné notamment à la vente de viande, de charcuterie ou de fromage, le dispositif de vente (10) comprenant une zone de vitrine (13) pourvue de capteurs de pression (13) qui détectent une force de poids respective et le dispositif de vente (10) comprenant un dispositif d'évaluation (42) qui est relié électriquement aux capteurs de pression (15), le procédé comprenant les étapes suivantes :

    - recevoir (62) un signal d'au moins un capteur de pression (15) qui reproduit une modification de la valeur du poids à un emplacement de la zone vitrine (13),
    - déterminer (63) un numéro d'identification de produit qui est combiné dans une première unité de mémorisation (44) à l'emplacement qui correspond au signal,

    **caractérisé en ce que** le procédé comprend les étapes suivantes :

    - sélectionner automatiquement (64) le numéro d'identification de produit dans une balance de magasin (17),
    - lire (65) les informations associées au numéro d'identification de produit dans une deuxième unité de mémorisation (45), et
    - afficher au moins une information associée au numéro d'identification de produit sur un affichage dirigé vers le client sur un capotage avant d'un comptoir, le comptoir faisant partie du dispositif de vente et comprenant la zone de vitrine, l'affichage, dirigé vers le client, du dispositif de vente étant intégré dans un capotage avant du comptoir, le capotage avant comportant une zone transparente et les informations supplémentaires étant au moins partiellement affichées dans la zone transparente du capotage avant, l'information associée au numéro d'identification de produit étant l'une au moins par des recettes, des données nutritionnelles, des données sur la fraîcheur, des données sur l'origine, des données sur le producteur, des offres spéciales, des prix au poids, des prix à l'unité, des noms de produits, des ingrédients, des allergènes et des articles adaptés au produit.

**Fig. 1**

**Fig. 2**

Fig. 3

**Fig. 4**

Fig. 5

**Fig. 6**

**Fig. 7**

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011014839 A1

- DE 10045516 A1